Europäisches Patentamt

European Patent Office

Office européen des brevets

(11) Veröffentlichungsnummer: **0 083 435**
A2

(12) # EUROPÄISCHE PATENTANMELDUNG

(21) Anmeldenummer: **82111782.7**

(51) Int. Cl.³: **B 29 D 27/00**, B 29 D 3/02

(22) Anmeldetag: **18.12.82**

(30) Priorität: **22.12.81 DE 3150906**

(71) Anmelder: **Pelz, Ernst, Dieselweg 10,
D-8192 Geretsried 2/Obb. (DE)**

(43) Veröffentlichungstag der Anmeldung: **13.07.83
Patentblatt 83/28**

(72) Erfinder: **Pelz, Ernst, Dieselweg 10,
D-8192 Geretsried 2/Obb. (DE)**

(74) Vertreter: **Goddar, Heinz, Dr. et al, FORRESTER &
BOEHMERT Widenmayerstrasse 4/I,
D-8000 München 22 (DE)**

(84) Benannte Vertragsstaaten: **BE DE FR GB IT NL SE**

(54) **Formteil mit formgepresster, polyesterharzgetränkter Kokos-, Baumwoll- oder Jutefaservliesmatte sowie Verfahren zu seiner Herstellung.**

(57) Formteil mit mindestens einer mit wärmehärtbarem Polyesterharz beschichteten oder getränkten und daraufhin unter Anwendung von Druck und Wärme formgepreßten Kokos-, Baumwoll- oder Jutefaservliesmatte, in deren Innerem durch entsprechende Abstimmung von Druck und Wärme im fertiggepreßten, getränkten und ausgehärteten Zustand Hohlräume vorhanden sind, wobei das Polyesterharz (14) ein treibmittelgeschäumtes Kunstharz ist, sowie Verfahren zu seiner Herstellung.

14

ACTORUM AG

EP 0 083 435 A2

0083435

Ernst Pelz, Dieselweg 10, 8192 Geretsried 2/Obb.

------------------------------------------------

Formteil mit formgepreßter, polyesterharzgetränkter Kokos-, Baumwoll- oder Jutefaservliesmatte sowie Verfahren zu seiner Herstellung

------------------------------------------------

Die Erfindung betrifft ein Formteil mit mindestens
einer mit wärmehärtbarem Polyesterharz beschichteten
oder getränkten und daraufhin unter Anwendung von
Druck und Wärme formgepreßten Kokos-, Baumwoll-
oder Jutefaservliesmatte, in deren Innerem durch
entsprechende Abstimmung von Druck und Wärme im
fertiggepreßten, getränkten und ausgehärteten Zustand Hohlräume vorhanden sind, sowie ein Verfahren
zum Herstellen eines Formteiles aus Polyesterharz
enthaltenden Kokos-, Baumwoll- oder Jutefaservliesmatten mit inneren Hohlräumen und einer Dichte von
weniger als 1,0, bei dem die Faservliesmatten mit
dem nicht ausgehärteten Polyesterharz beschichtet
und unmittelbar nach dem Beschichten unter Anwendung

422

von Druck und Wärme formgepreßt werden.

Insgesamt bezieht sich die Erfindung auf Formteile, wie sie insbesondere für den Bau von Wasser-, Luft- und Landfahrzeugen und ähnlichem eingesetzt werden. Aus der DE-PS 28 30 320 ist ein Verfahren zur Herstellung eines Formteils der vorstehend genannten Art bekannt, welches Formteile mit guten Festigkeitseigenschaften mit relativ einfachem Werkzeug und in nur einem Preßvorgang herstellt. Durch die Verwendung von Polyesterharzen werden bei diesem bekannten Verfahren die Nachteile der bis dahin erfolgten Verwendung von Phenolharzen, welche teure und aufwendige Werkzeuge erfordern, umgangen.

Die danach hergestellten Plattenformkörper weisen jedoch den Nachteil auf, daß sie sehr dicht sind. Aus dieser Dichte entsteht beim Verbund des gehärteten Polyesterharzes mit dem Faservliesstoff ein Formteil, welches schlecht isoliert, da es Wärme gut leitet. Außerdem weist es aufgrund seiner Elastizitätseigenschaften unerwünschte akustische Eigenschaften auf; es wird nämlich leicht in Schwingungen versetzt und neigt beispielsweise bei der Verwendung in Fahrzeugen dazu, Resonanzfrequenzen aufzunehmen und dementsprechend unerwünschterweise das Innenraumgeräusch in Fahrzeugen zu erhöhen.

Ferner sind derartige kompakte Bauteile schwer, was insbesondere bei den ständig wachsenden Anforderungen an Kraftfahrzeuge bezüglich Energieersparnis und dadurch erforderlicher Leichtigkeit unerwünscht ist.

Es ist bereits vorgeschlagen worden, zur Herabsetzung der Dichte von Formteilen Wellpappe als Schicht in die Formteile einzuführen, wodurch die Teile insgesamt leichter werden.

Dieses Einführen von Wellpappe ist vorteilhaft, eignet sich jedoch nur für Teile, die keinen großen mechanischen Beanspruchungen, wie Torsion, Biegen und ähnlichem,ausgesetzt sind. Die Wellpappe besitzt den Nachteil, nicht elastisch zu sein; daher altern mit Wellpappe hergestellte Formteile, die mechanischen Belastungen ausgesetzt sind, schneller als solche, die ohne Wellpappe hergestellt sind.

Der Erfindung liegt daher die Aufgabe zugrunde, Formteile sowie Verfahren zur Herstellung derselben zu finden, welche bei gleichzeitig geringer Dichte zufriedenstellende mechanische Eigenschaften aufweisen  sowie schall- und wärmedämmend wirken.

Die Aufgabe wird durch ein Formteil der oben genannten Art gelöst, das dadurch gekennzeichnet ist, daß das Polyesterharz ein durch ein Treibmittel geschäumtes Kunstharz ist.

Das erfindungsgemäße Verfahren sieht zur Lösung der Aufgabe, Formteile mit verbesserter thermischer und akustischer Dämmwirkung und gleichmäßiger Kunstharzverteilung zu schaffen, vor, daß ein Polyesterharz mit einem Treibmittelzusatz von 0,5 bis 5 Gew.-% verwendet wird; und daß die beschichteten Faservliesmatten einlagig dem Formpreßvorgang unterworfen werden.

Weitere vorteilhafte und besonders bevorzugte Ausführungsformen des Formteiles und des Verfahrens nach der Erfindung
ergeben sich aus den Unteransprüchen.

Die erfindungsgemäße Verwendung von mit Treibmittel versetztem Kunstharz ermöglicht die Herstellung eines festen
Verbundes mit zufriedenstellenden mechanischen Eigenschaften
bei gleichzeitig verringertem spezifischen Gewicht.

Das erfindungsgemäße Formteil weist verbesserte Antidröhneigenschaften gegenüber den bisher verwandten Formteilen mit nicht "geschäumten" Polyester-Kunstharzen auf
und zeichnet sich weiterhin gegenüber dem gattungsgemäßen Formteil dadurch aus, daß es durch die Verwendung
des Treibmittelzusatzes mit einer noch geringeren
spezifischen Dichte herstellbar ist, wobei die Wärmedämmungseigenschaften und die Schallisoliereigenschaften
weiter verbessert werden konnten.

Die erfindungsgemäß vorgesehene Zusammensetzung des Formteiles aus mehreren Schichten kann entsprechend den erwünschten mechanischen Eigenschaften durch Einbau unterschiedlicher Schichten in den Verbund gesteuert werden.
Soll beispielsweise ein mechanisch hoch beanspruchbares,
dabei jedoch mit günstigen Schallisolierungseigenschaften
ausgestattetes Material hergestellt werden, so empfiehlt
sich die Verwendung von lediglich aus gegebenenfalls mittels
einer Folie verstärkten Faservlieses hergestellten Formteilen,
während dann, wenn hohe Isolationseigenschaften bei verminderter mechanischer Beanspruchung verlangt werden, durch
den Einbau von Wellpappe zusätzliche Isolationswirkung erzielt werden kann.

Dabei besteht selbstverständlich die Möglichkeit, Wellpappeschichten kreuzweise, aufeinander oder alternativ abwechselnd
mit anderen Schichten anzuordnen, so daß besonders leichte
Sandwich-Verbundkonstruktionen entstehen. Dabei empfiehlt
es sich, die Wellpappe in tiefere Schichten zu verlegen,
da ansonsten bei Formvorgängen Knickstellen an der Oberfläche einer freiliegenden Wellpappeschicht auftreten
können. Dies empfiehlt sich schon deshalb, weil bei
einer freiliegenden Wellpappoberschicht unter Umständen
durch Feuchtigkeitsadsorption ein Verschimmeln oder
sonstiger mikrobiologischer Abbau der Wellpappe hervorgerufen werden kann.

Falls eine unterschiedliche Dicke des Formteiles erwünscht
ist, beispielsweise Vertiefungen oder Erhöhungen eingepreßt werden sollen, wird ein partiell unterschiedlich
hoher Druck auf das Formteil aufgebracht. Das Formteil
wird dadurch entsprechend geformt und durch das erhärtete,
vernetzte Polyesterharz in dieser Form gehalten.

Nachstehend sind Ausführungsbeispiele der Erfindung anhand
der Zeichnungen im einzelnen erläutert. Dabei zeigt:

Fig. 1: ein aus einer einzigen Faservliesmatte,
getränkt mit treibmittelhaltigem Polyesterharz hergestelltes Formteil;

Fig. 2: ein weiteres Ausführungsbeispiel eines
erfindungsgemäßen Formteils, bei dem
eine Wellpappeschicht auf die Kunststoffgetränkte Faservliesmatte aufgebracht
worden ist; und

Fig. 3: eine mit Kunststoff beschichtete, auf einer
Papierbahn aufgenadelte Faservliesmatte,
vor dem Formpressen.

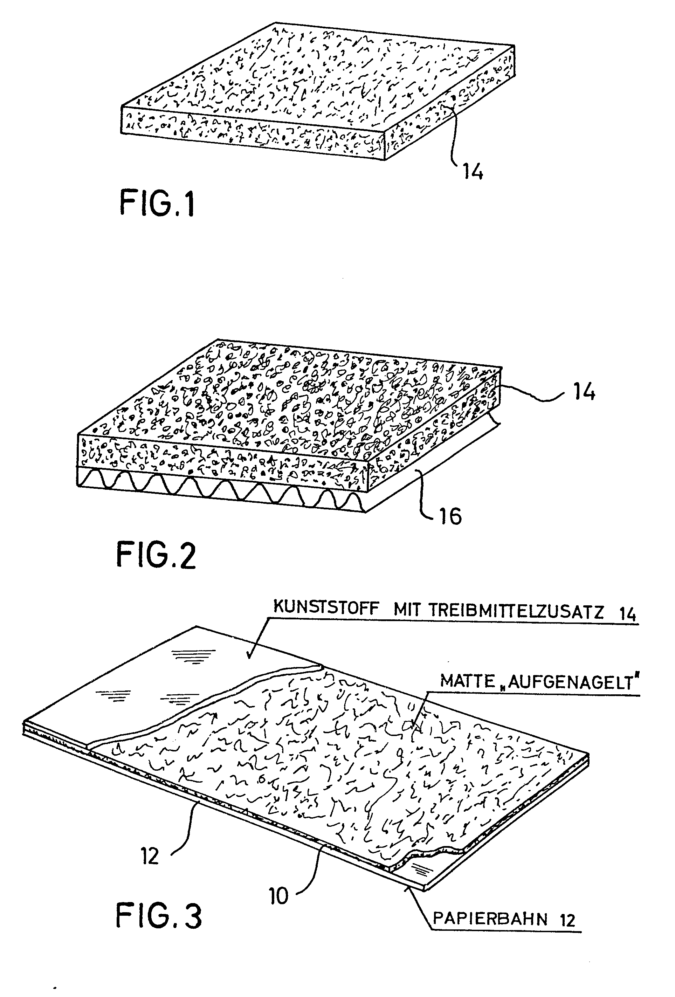

Bei dem in Fig. 1 gezeigten Ausführungsbeispiel der Erfindung ist eine mit zwischen 2 und 5 Gew.-% Treibmittel aufweisenden Polyesterharz-getränkte Faservliesmatte dem Formpreßvorgang unterworfen worden, woraufhin sich durch das Gasentwickeln des Treibmittels eine schaumartige, mit den Vlies-Fasern durchsetztes Formstück ergibt. Hier wurde als Treibmittel ein Hydrazid, nämlich Toluylsulfohydrazid unter das Polyester gemischt, es kann jedoch genau so gut auch jedes andere geeignete bei Einwirkung von Hitze und/oder Druck gasentwickelnde Treibmittel zugesetzt werden, so auch beispielsweise andere Hydrazide, oder auch Azide oder Carbonate.

Das so entstehende Formteil ist homogen und weist eine hohe Festigkeit bei gleichzeitig sehr guten Wärme- und Schalldämmeigenschaften auf.

Das in Fig. 2 dargestellte Formteil wurde durch Übereinanderlegen einer Wellpappeschicht 16 mit einer mit Kunststoff beschichteten Faservliesmatte 14 mit anschließendem Formpressen, wodurch die Wellpappeschicht 16 mit der Faserschicht 14 verbunden wurde, hergestellt. Auch in diesem Fall wurde erfindungsgemäß mit Treibmittelzusatz versetztes Polyesterharz eingesetzt, um ein Formteil möglichst geringer Dicke bei gleichzeitig hoher Festigkeit zu er-halten.

In Fig. 3 ist ein Verbund dargestellt, wie er in das Formpreßwerkzeug eingebracht wird. Auf einer Folie, hier eine Papierbahn 12, wird eine Faservliesmatte aufgenadelt und anschließend eine Kunststoffschicht durch Aufgießen von Polyester oder Auflegen einer Kunststoffolie, welche aus Polyester, mit Treibmittel versetzt, besteht, auf der dem Papier abgewandten Seite aufgebracht. Beim Einlegen in das Preßwerkzeug verflüssigt sich der Kunststoff und durchdringt die Faservliesmatte unter gleichzeitiger Gas-Freisetzung. Dadurch wird eine gleichmäßige Verteilung des schäumenden Kunststoffes in dem Formteil gewährleistet, während nichtsdestoweniger ein leichtes Preßformstück entsteht.

Insgesamt wird durch die Verwendung von mit Treibmittelzusatz versetztem Polyester außerdem ein Einsatz von weitaus weniger Kunststoff als bisher notwendig ermöglicht, da durch den Treibmittelzusatz der Kunststoff gleichmäßig in der Form des Formpreßwerkzeugs verteilt wird, so daß ein regelmäßiger Verbund entsteht, ohne daß jedoch die Form vollständig, d.h. ohne jegliche Lufträume, vom Polyester ausgefüllt werden muß, was zu einem schweren und mit ungünstigen Wärme- und Schalldämmeigenschaften ausgestatteten Stück führen würde.

Beispiel 1:

10 kg Polyesterharz werden mit 600 g Toluylsulofhydrazid innig vermischt. Die Mischung wird anschließend auf eine auf Natronkraftpapier aufgenadelte Faservliesmatte aufgebracht und in das Formwerkzeug geschoben. Es entsteht ein Formkörper mit einem spezifischen Gewicht von 0,5 , der sich zur Herstellung von Verkleidungen eignet.

0083435

Beispiel 2:

Zur Herstellung eines Preßformteils wird, wie in Beispiel 1 beschieben, vorgegangen, wobei als verstärkendes Papier Kreppapier eingesetzt wird, um ein Reißen der Papierbahn während des Formvorganges zu verhindern.

Ansprüche 1 bis 11
====================

1. Formteil mit mindestens einer mit wärmehärtbarem Polyesterharz beschichteten oder getränkten und daraufhin unter Anwendung von Druck und Wärme formgepreßten Kokos-, Baumwoll- oder Jutefaservliesmatte, in deren Innerem durch entsprechende Abstimmung von Druck und Wärme im fertiggepreßten, getränkten und ausgehärteten Zustand Hohlräume vorhanden sind, dadurch gekennzeichnet, daß das Polyesterharz (14) durch ein Treibmittel geschäumtes Kunstharz ist.

2. Formteil nach Anspruch 1, dadurch gekennzeichnet, daß das Treibmittel dem Polyester vor der Wärmebehandlung zu 0,5 bis 5 Gew.-% zugemischt ist.

3. Formteil nach einem der vorangehenden Ansprüche, dadurch gekennzeichnet, daß das Treibmittel ein aus der Gruppe Hydrazide, Azide und Carbonate ausgewähltes Treibmittel ist.

422

0083435

4. Formteil nach einem der vorangehenden Ansprüche, dadurch gekennzeichnet, daß die Faservliesmatte (10) mit Folie (12) verstärkt ist.

5. Formteil nach einem der vorangehenden Ansprüche, dadurch gekennzeichnet, daß die Folie (12) Papier, Metallfolie, Kunststoffolie oder dergleichen ist.

6. Formteil nach einem der vorangehenden Ansprüche, dadurch gekennzeichnet, daß die Folie (12) durch Aufnadeln, Aufkleben, Annähen oder dergleichen mit der Vliesmatte verbunden ist.

7. Formteil nach einem der vorangehenden Ansprüche, dadurch gekennzeichnet, daß die Folie (12) gekreppt oder gefaltet ist.

8 . Formteil nach einem der vorangehenden Ansprüche, dadurch gekennzeichnet, daß die Faservliesmatte (14) auf mindestens einer Seite mit mindestens einer Wellpappeschicht (16) verbunden ist.

9. Verfahren zum Herstellen eines Formteiles aus Polyesterharz enthaltenden Kokos-, Baumwoll- oder Jutefaservliesmatten mit inneren Holräumen und einer Dichte von weniger als 1,0, bei dem die Faservliesmatten mit dem nicht ausgehärteten Polyesterharz beschichtet und unmittelbar nach dem Beschichten unter Anwendung von Druck und Wärme formgepreßt werden, dadurch gekennzeichnet, daß ein Polyesterharz mit einem Treibmittelzusatz von 0,5 bis 5 Gew.-% verwendet wird; und daß die beschichteten Faservliesmatten einlagig dem Formpreßvorgang unterworfen werden.

10. Verfahren nach Anspruch 9, dadurch gekennzeichnet, daß als Treibmittel ein Hydrazid, Azid oder Carbonat ausgewählt wird.

11. Verfahren nach Anspruch 9 oder 10, dadurch gekennzeichnet, daß beim Formpreßvorgang bereichsweise unterschiedliche Preßdrücke angewendet werden.

**FIG.1**

**FIG.2**

KUNSTSTOFF MIT TREIBMITTELZUSATZ 14

MATTE „AUFGENAGELT"

PAPIERBAHN 12

**FIG.3**